# DEMANDE DE BREVET EUROPEEN

(11) **EP 1 337 018 A1**
(43) Date de publication de la demande: **20.08.2003**
(21) Numéro de dépôt: 03290347.8
(22) Date de dépôt: 12.02.2003
(51) Int. Cl.: H02B 13/065

(54) **Traversée de courant sous enveloppe metallique étanche au gaz**

(30) Priorité: 18.02.2002 FR 0202039
(71) Demandeur: Alstom, 75116 Paris (FR)
(72) Inventeur: Alfonsi, Saturnin, 34400 Lunel (FR); Motro, Pascal, 34090 Montpellier (FR)
(74) Mandataire: Gosse, Michel

(57) **Abrégé**

La traversée de courant pour appareillage électrique haute et moyenne tension blindé isolé au gaz comprend une enveloppe métallique (2) sensiblement cylindrique entourant une barre conductrice (4). Elle est caractérisée en ce qu'elle comporte également une pièce annulaire (6) en matériau conducteur disposée autour de l'enveloppe (2), et en ce qu'elle comporte un capot (7) entourant à distance l'enveloppe (2) et agencé pour définir avec cette enveloppe un espace clos (E) délimité à une extrémité par la pièce annulaire (6). Cette pièce est apte à être sacrifiée en pouvant fondre partiellement si un arc interne (A) perce l'enveloppe jusqu'à l'atteindre. Une telle traversée permet d'éviter les éventuelles projections de métal en fusion et de gaz chauds vers l'extérieur suite à un arc interne.

## Description

L'invention concerne une traversée de courant pour appareillage électrique blindé et isolé au gaz, comprenant une enveloppe métallique sensiblement cylindrique entourant une barre conductrice.

L'invention concerne plus particulièrement une traversée de courant destinée à être montée sur une cuve d'un appareillage haute ou moyenne tension blindé tel qu'un disjoncteur. Le montage d'une traversée de courant sur une cuve est classiquement désigné par le terme "piquage" dans le métier, ce terme désignant aussi l'ouverture prévue dans la cuve pour recevoir la traversée. Une telle cuve, couramment désignée par le terme anglais "Dead Tank", est électriquement reliée à la terre. Dans une telle installation, la traversée de courant peut être disposée verticalement par rapport à la cuve lorsque celle-ci s'étend horizontalement et est fixée au sol, mais elle peut aussi être disposée selon une autre direction. Cette traversée comprend une barre conductrice qui assure la jonction entre un conducteur situé à l'extérieur de la cuve et un conducteur ou un appareillage électrique situé dans la cuve et entouré d'un gaz diélectrique tel que du SF₆. Une partie de cette barre conductrice est située à l'extérieur de la cuve et est isolée électriquement de l'air ambiant par un manchon ou un surmoulage en matériau électriquement isolant qui recouvre la barre sur une certaine longueur jusqu'à son extrémité, cette dernière étant classiquement reliée à un conducteur haute ou moyenne tension. Ce type de traversée comprend généralement une enveloppe métallique sensiblement cylindrique entourant la barre conductrice et raccordée à une ouverture pratiquée dans la cuve. L'enveloppe est par exemple soudée à une collerette de la cuve de manière à former avec la cuve un ensemble étanche renfermant le gaz d'isolation. Par cette ouverture, la barre conductrice plonge dans la cuve pour être électriquement reliée à un élément sous tension de l'appareillage électrique. Une extrémité de l'enveloppe métallique est classiquement fixée sur le pourtour externe de l'extrémité inférieure du manchon. Dans ce qui suit, le terme manchon désigne indifféremment un véritable manchon amovible ou un surmoulage sans possibilité de retrait de la pièce isolante.

Dans le cas où un arc électrique s'établit entre la cuve de disjoncteur et la barre conductrice, les forces électromagnétiques conduisent cet arc à se déplacer le long de la barre conductrice jusqu'aux traversées de courant, pour se stabiliser entre la barre conductrice et l'enveloppe métallique contre la surface d'extrémité du manchon isolant qui est en contact avec le gaz contenu dans l'enveloppe. Dans ce qui suit, on désigne par face interne du manchon cette surface d'extrémité. Un tel arc est traversé par un courant de très forte intensité pouvant faire fondre l'enveloppe métallique. Typiquement, l'arc électrique perfore l'enveloppe métallique et peut même éventuellement la découper en tournant autour de la barre conductrice. Ce phénomène provoque des projections de métal en fusion et de gaz chauds vers l'extérieur de l'enveloppe métallique. Un tel accident peut se produire malgré la présence d'une soupape de sécurité prévue pour évacuer les gaz chauds en surpression dans une direction contrôlée vers l'extérieur de la cuve. Ce genre d'accident peut être dangereux pour des opérateurs éventuellement situés à proximité.

Pour améliorer la tenue à l'arc électrique, on augmente classiquement l'épaisseur de l'enveloppe métallique , ce qui accroît significativement le prix d'une telle traversée du fait notamment qu'un métal inoxydable est généralement employé pour l'enveloppe.

Une autre solution classique pour améliorer la tenue à l'arc consiste à disposer dans un emplacement déterminé dans la cuve de l'appareillage électrique une pièce électriquement reliée à la cuve et apte à être sacrifiée par l'arc. Une réduction des distances diélectriques entre phase et masse en ce point permet d'y favoriser, lors d'une surtension anormale, l'apparition de l'arc électrique et de le stabiliser entre la pièce et un élément sous tension de l'appareillage, de telle sorte qu'il provoque éventuellement la fusion de cette pièce sans toutefois détériorer la cuve. Cependant les forces électromagnétiques attirant l'arc le long de la barre conductrice ne permettent pas de garantir que l'arc se stabilise sur la pièce pouvant être sacrifiée. Dans le cas où l'arc n'est pas stable sur la pièce ou bien s'établit ailleurs que sur cette pièce, il remonte le long de la traversée et perce l'enveloppe métallique avec les conséquences mentionnées précédemment.

Le but de l'invention est de remédier à cet inconvénient en proposant un agencement de traversée capable d'éviter toute projection de métal en fusion ou gaz chauds en dehors de la zone de la traversée, en cas d'arc interne.

A cet effet, l'invention a pour objet une traversée de courant pour appareillage électrique haute tension blindé isolé au gaz dans une cuve, comprenant une barre conductrice entourée d'un manchon isolant sur une partie de sa longueur, comprenant aussi une enveloppe métallique sensiblement cylindrique contenant du gaz et qui entoure ladite barre conductrice sur une autre partie de sa longueur, une extrémité de ladite enveloppe étant ouverte pour être raccordée de façon étanche à ladite cuve, une autre extrémité de ladite enveloppe étant fermée par ledit manchon isolant qui présente une face interne définie comme sa surface d'extrémité qui est en contact avec le gaz contenu dans l'enveloppe, caractérisée en ce qu'elle comporte une pièce annulaire en matériau conducteur entourant ladite enveloppe métallique et située sensiblement au même niveau que la face interne du manchon isolant le long de l'axe de la barre, et en ce qu'elle comporte un capot entourant ladite enveloppe métallique et agencé pour former avec cette enveloppe un espace clos délimité par ladite pièce annulaire à une extrémité.

Une telle construction fait que lorsque l'arc remonte le long de la traversée, il est bloqué par la face interne du manchon isolant, et conséquemment, il perce l'enveloppe métallique avant de s'accrocher sur la pièce annulaire. Les éventuelles projections de métal en fusion provenant de la pièce annulaire vers l'extérieur de l'enveloppe métallique sont contenues dans l'espace clos.

Dans un mode de réalisation préféré, la pièce annulaire est composée deux demi brides fixées l'une à l'autre par des moyens de vissage, de manière à pouvoir être serrée sur l'enveloppe métallique, et le capot qui a une forme de révolution est fixé par frettage, ce qui permet de réduire le coût de fabrication de la traversée.

Selon un autre mode de réalisation préféré, la surface extérieure de la pièce annulaire est intégralement recouverte par une gaine en matériau isolant pour éviter toute projection de métal en fusion vers l'extérieur en cas d'arc électrique de très forte intensité.

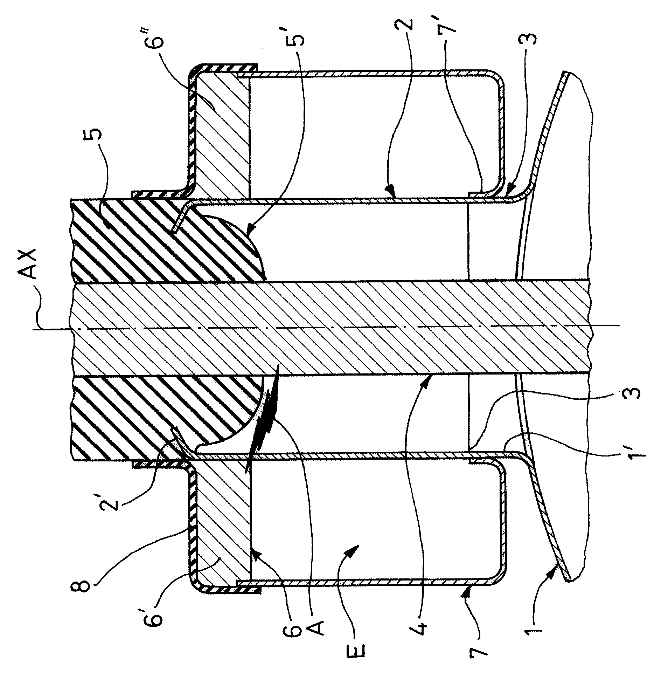

L'invention est décrite plus en détail dans ce qui suit, et en référence au dessin annexé qui en illustre une forme de réalisation à titre d'exemple non limitatif.

La figure unique est une représentation en coupe d'une traversée selon l'invention.

Une cuve d'un appareillage électrique haute ou moyenne tension tel un disjoncteur comprend généralement des piquages sensiblement cylindriques pour la connexion des traversées de courant. Chaque enveloppe métallique d'une traversée de courant est prolongée par une collerette réalisée dans la cuve au niveau de ce que nous appelons un piquage dans la présente.

Dans l'exemple de la figure unique, une traversée de courant selon l'invention est installée dans le prolongement sensiblement vertical d'un piquage réalisé sur la partie supérieure de la cuve 1, cette cuve étant ici fixée au sol. La collerette 1' est obtenue par exemple par extrusion de la cuve 1 et son diamètre est ici sensiblement identique à celui de l'enveloppe métallique 2 de la traversée pour être soudée par aboutement avec une extrémité de l'enveloppe par un cordon de soudure 3. Cette enveloppe 2 entoure une barre conductrice 4 qui pénètre à l'intérieur de la cuve 1 pour être électriquement connectée à un élément de l'appareillage. Cette barre 4 s'étend selon l'axe AX pour relier l'appareillage à d'autres barres conductrices ou à des câbles électriques extérieurs à la cuve. Au niveau de l'extrémité de l'enveloppe opposée au piquage, la barre est entourée par un manchon 5 en matériau électriquement isolant auquel l'enveloppe métallique 2 est raccordée de façon à assurer l'étanchéité de la cuve. Dans l'exemple représenté, ce manchon 5 a un diamètre externe sensiblement égal au diamètre de l'enveloppe métallique, et sa face interne 5' présente une forme convexe.

Selon l'invention, l'enveloppe métallique 2 est entourée par une pièce annulaire 6 en matériau conducteur située sensiblement au même niveau que la face interne 5' du manchon isolant le long de l'axe AX. Dans le cas où un arc électrique interne A apparaît au sein de la cuve 1, les forces électromagnétiques projettent l'arc entre la barre conductrice 4 et l'enveloppe métallique 2, contre la face 5' du manchon isolant, et fait fondre cette enveloppe. Cet arc A atteint ensuite nécessairement la pièce annulaire 6 pour s'y stabiliser. Plus particulièrement, comme un tel arc a une durée limitée par les dispositif de protection contre les court circuits du réseau électrique amont, la pièce annulaire 6 est conçue de façon à pouvoir être sacrifiée tout en étant suffisamment massive pour ne pas fondre entièrement sous l'effet de l'arc A pendant cette durée.

En outre, l'enveloppe métallique est entourée à distance par un capot 7 agencé pour former avec elle un espace clos E délimité par la pièce annulaire 6 à une extrémité. En cas de projection de métal en fusion provenant de la fusion de la pièce annulaire ou de l'enveloppe sous l'effet de l'arc A, le métal en fusion et les gaz chauds sont retenus à l'intérieur de l'enceinte E par le capot 7, de telle sorte qu'il n'y a pas de manifestation externe de l'arc interne. Cette pièce annulaire 6 est réalisée en matériau conducteur comme par exemple de l'acier, en étant issue de fonderie, ou bien d'estampage. Dans l'exemple représenté sur la figure unique, la pièce annulaire 6 présente une section sensiblement rectangulaire. Elle a un diamètre interne sensiblement égal au diamètre externe de l'enveloppe métallique 2 qu'elle entoure, et est disposée sensiblement au même niveau que la face interne du manchon isolant le long de l'axe de la barre.

La pièce annulaire 6 entoure donc l'extrémité de l'enveloppe opposée au piquage, et peut être montée sur l'enveloppe métallique de différentes façons, pourvu qu'elle y soit rigidement fixée ou fermement maintenue. Avantageusement, cette pièce peut être constituée de deux demi brides 6' et 6" assemblées l'une à l'autre par vissage. Lors de l'assemblage, les demi brides 6' et 6" peuvent être d'abord positionnées autour de l'enveloppe métallique 2 avant de procéder au serrage des moyens de vissage. Selon ce mode de mise en oeuvre, le montage de la pièce annulaire est simplifié pour réduire le coût de la traversée.

Cette pièce annulaire peut aussi être maintenue en position autour de l'enveloppe 2 de la traversée par l'intermédiaire de moyens de fixation classiques, ou encore par l'intermédiaire du capot 7 de manière à rester en position lorsqu'un arc électrique la fait fondre. Comme représenté sur la figure, la pièce 6 peut être fixée sur l'enveloppe métallique en contact direct avec cette dernière. Avantageusement, il est prévu que l'enveloppe 2 soit fixée à l'extrémité du manchon isolant 5 de sorte que la pièce annulaire 6 ne risque pas de bouger ou de se décrocher en cas de fusion de l'enveloppe métallique 2 sur toute sa circonférence par l'arc électrique A. Plus particulièrement, dans le cas où l'arc électrique A se déplace en tournant et fait fondre sur toute sa circonférence une certaine hauteur de l'enveloppe métallique 2 tout en faisant fondre sur tout son diamètre une portion de la barre conductrice 4, la pièce annulaire 6 reste maintenue autour de l'extrémité du manchon par l'intermédiaire de l'enveloppe métallique 2 restante.

Si le manchon est réalisé par surmoulage, il est avantageux que la fixation de l'enveloppe métallique 2 à l'extrémité du manchon soit effectuée par ce surmoulage, en permettant que le bord d'extrémité 2' de l'enveloppe soit pris dans la résine qui est injectée. Comme visible sur la figure unique, ce bord d'extrémité 2' a un diamètre réduit par rapport à l'enveloppe afin de former un contrôle du champ électrostatique au sein de l'isolant 5. Avec cet agencement, la fixation de l'autre extrémité de l'enveloppe 2 sur la collerette 1' de la cuve 1 peut être réalisée par une soudure au niveau 3 .

Le capot 7 qui définit avec la pièce annulaire 6 et l'enveloppe métallique 2 un espace clos E peut être réalisé par exemple à partir d'une tôle mise en forme. Ce capot 7 a par exemple une forme de révolution définissant un cylindre ayant un diamètre proche du diamètre externe de la pièce annulaire. Avantageusement ce capot comporte un fond sensiblement plan et normal à son axe de révolution qui est ici l'axe AX et présente donc une demi section longitudinale approximativement en forme de L. Comme visible sur la figure unique, l'orifice central du capot 7 présente un diamètre proche du diamètre externe de l'enveloppe 2 et comprend un rebord cylindrique 7' destiné à entourer cette enveloppe. Avantageusement, ce capot pourra être monté par frettage de son rebord cylindrique sur l'enveloppe pour simplifier l'assemblage de la traversée afin d'en réduire le coût.

Comme représenté sur la figure unique, la pièce annulaire 6 comporte au niveau de sa partie périphérique un épaulement qui définit le diamètre externe de la pièce. Cette pièce annulaire peut ainsi être emboîtée dans l'extrémité de la partie cylindrique du capot 7 pour amener cette extrémité en butée contre l'épaulement. L'espace clos E est alors délimité par la pièce annulaire 6 dans la direction axiale opposée au piquage.

De préférence, la pièce annulaire 6 est recouverte intégralement sur sa surface extérieure, incluant sa surface extérieure plane perpendiculaire à la barre, par une gaine 8 en matériau isolant résistant à l'arc. En cas de fusion de la pièce 6 sur toute sa hauteur par un arc, ou simplement de perforation de cette pièce par l'arc, la gaine 8 permet d'éviter toute projection de métal en fusion hors de la traversée. D'autre part, cette gaine 8 permet aussi d'isoler l'espace clos de l'air extérieur à la traversée, même si la pièce 6 est réalisée en deux demi brides. Avantageusement, elle se prolonge dans la direction axiale AX des deux côtés de la pièce 6, pour entourer également une partie du capot 7 et une partie du manchon isolant 5.

Cette gaine 8 peut être réalisée en différents matériaux présentant une tenue thermique satisfaisante, de manière à résister à un éventuel arc électrique au niveau de la traversée pour éviter toute perforation. Avantageusement, cette gaine ainsi que le manchon ou surmoulage 5 sont réalisés en EPDM ou en silicone. Ces matériaux présentent une élasticité intéressante pour réaliser un serrage correct de la gaine sur la pièce annulaire. Cette gaine peut être installée par glissement le long du manchon isolant 5 pour venir recouvrir la pièce annulaire 6 et l'extrémité du capot 7.

Comme mentionné précédemment, une traversée de courant selon l'invention n'est pas nécessairement disposée selon un axe vertical, mais peut avoir son axe AX dans toute autre direction. En outre, les conducteurs extérieurs reliés à l'appareillage contenu dans la cuve blindée peuvent être situés en dessous de la cuve, comme c'est souvent le cas par exemple pour des équipements blindés d'intérieur. Les piquages pour les traversées de courant sont alors réalisés sur la partie basse de la cuve.

Par ailleurs, l'espace clos E peut être utilisé pour loger des appareils de mesure. En particulier, un ou plusieurs transformateurs de courant peuvent être installés autour de l'enveloppe métallique 2 à l'intérieur de cet espace.

## Revendications

1. Traversée de courant pour appareillage électrique blindé isolé au gaz dans une cuve, comprenant une barre conductrice (4) s'étendant selon un axe (AX) et entourée sur une partie de sa longueur par un manchon isolant (5), comprenant aussi une enveloppe métallique (2) sensiblement cylindrique contenant du gaz et qui entoure ladite barre (4) sur une autre partie de sa longueur, une extrémité de ladite enveloppe (2) étant ouverte pour être raccordée de façon étanche à ladite cuve, une autre extrémité de ladite enveloppe étant fermée par ledit manchon (5) qui présente une face interne (5') définie comme sa surface d'extrémité en contact avec le gaz contenu dans l'enveloppe, **caractérisée en ce qu'**elle comporte une pièce annulaire (6) en matériau conducteur entourant ladite enveloppe (2) et située sensiblement au même niveau que ladite face interne (5') dudit manchon le long de l'axe (AX) de ladite barre conductrice (4), et **en ce qu'**elle comporte un capot (7) entourant ladite enveloppe (2) et agencé pour former avec cette enveloppe un espace clos (E) délimité par ladite pièce annulaire (6) à une extrémité.

2. Traversée de courant selon la revendication 1, dans laquelle ladite pièce annulaire (6) est constituée de deux demi brides (6', 6") fixées l'une à l'autre par vissage, lesdites demi brides (6', 6") étant serrées autour de la partie d'extrémité de ladite enveloppe métallique (2) fermée par ledit manchon (5).

3. Traversée de courant selon l'une des revendications 1 et 2, dans laquelle ledit capot (7) a une forme de révolution autour de l'axe (AX) de la barre et est fixé par frettage à ladite enveloppe métallique (2) ou à une collerette (1') de la cuve (1) raccordée à ladite enveloppe.

4. Traversée de courant selon l'une des revendications 1 à 3, dans laquelle la pièce annulaire (6) est agencée pour s'emboîter dans l'extrémité de la partie cylindrique du capot (7), et comporte un épaulement formant butée pour l'emboîtement.

5. Traversée de courant selon l'une des revendications 1 à 4, comprenant une gaine (8) en matériau isolant qui recouvre intégralement la surface extérieure de la pièce annulaire (6).

6. Traversée de courant selon la revendication 5, dans laquelle ledit matériau isolant est de l'EPDM ou du silicone.

7. Traversée de courant selon l'une des revendications 1 à 6, dans laquelle un ou plusieurs transformateurs de courant sont installés autour de ladite enveloppe métallique (2) à l'intérieur dudit espace clos (E).

8. Appareillage électrique blindé isolé au gaz, **caractérisé en ce qu'**il comprend une traversée de courant selon l'une des revendications 1 à 7 montée en piquage sur la cuve de l'appareillage.
